# EUROPÄISCHE PATENTSCHRIFT

(11) **EP 1 048 855 B1**
(45) Veröffentlichungstag und Bekanntmachung des Hinweises auf die Patenterteilung: **19.09.2001**
(21) Anmeldenummer: 99107500.3
(22) Anmeldetag: 30.04.1999
(51) Int. Cl.: F15C 5/00, F15B 7/08

(54) **Thermohydraulischer Aktor für Mikrobewegungen**
Thermohydraulic actuator for micromovements
Vérin thermohydraulique pour micromouvements

(43) Veröffentlichungstag der Anmeldung: 02.11.2000
(73) Patentinhaber: Pickelmann, Lutz, Dr., 81673 München (DE)
(72) Erfinder: Pickelmann, Lutz, Dr., 81673 München (DE)
(74) Vertreter: Schwabe - Sandmair - Marx

(56) Entgegenhaltungen:
- US-A- 4 943 032
- US-A- 5 186 001
- PATENT ABSTRACTS OF JAPAN vol. 004, no. 102 (M-022), 22. Juli 1980 (1980-07-22) & JP 55 060707 A (KIMURA SHINDAI KOGYO), 8. Mai 1980 (1980-05-08)

## Beschreibung

Die Erfindung betrifft eine Mikrobewegungsvorrichtung mit einer Menge eines Fluids in einem Behälter und einem Bewegungsabschnitt, der durch eine Einwirkung auf die Fluidmenge reagiert, gemäß dem Patentanspruch 1.

Derlei Bewegungsvorrichtungen gemäß dem Oberbegriff des Patentanspruchs 1 werden bei verschiedensten Gelegenheiten eingesetzt, um eine Justierung bzw. eine Verschiebung in einem sehr geringen Umfang durchführen zu können. Hier ist es beispielsweise möglich, eine Nadel in eine Zelle eines biologischen Organismus einzustechen, mikromechanische Gegenstände zusammenzusetzen oder dergleichen mehr.

Unter den bekannten Bewegungsvorrichtungen sind insbesondere hydraulische Justiereinrichtungen für Mikropositionierzwecke bekannt. Es sind vergleichsweise große Verstellwege möglich, die beispielsweise mit piezoelektrischen Elementen nur schwer oder gar nicht erreicht werden können, und dies bei einer zugleich sehr geringen Einstelldistanz bzw. einer sehr hohen Einstellempfindlichkeit in einer Größenordnung von ≤ 0,1 µm. Hier wird Flüssigkeit mittels eines Stempels oder dergleichen mechanisch verdrängt und das verdrängte Flüssigkeitsvolumen wird dazu herangezogen, kontrolliert deformierbare Bewegungsabschnitte, wie z.B. Membranen, Bälge oder dergleichen, in ihren Abmessungen, beispielsweise in ihrer Längenausdehnung, zu manipulieren. Bei derartigen herkömmlichen hydraulisch-mechanisch betriebenen Bewegungsvorrichtungen bewirken Veränderungen der Umgebungstemperatur ungewollte Verstellungen aufgrund der Ausdehnung bzw. aufgrund des Zusammenziehens der verwendeten Fluidmenge, die eine Verstellung des Bewegungsabschnittes bewirkt.

Die US 4,943,032 offenbart ein Ventil mit einer Einrichtung, bestehend aus einer Halbleiterscheibe, einer Membran sowie einer Widerstandsheizung. In eine Halbleiterscheibe werden Ausnehmungen geätzt, in die eine Flüssigkeit eingefüllt wird. Um eine Membran zum Ansprechen zu bringen, wird die Flüssigkeit verdampft, d.h., es wird mit einem Phasenübergang gearbeitet, um die notwendigen Kräfte aufbringen zu können, um die Membran so auslenken zu können, dass bei dieser Art von Ventil ein Strömungsdurchgang für ein Gas mehr oder minder geöffnet oder geschlossen werden kann. Hierbei wird gemäß der Offenbarung der Beschreibung dieser Entgegenhaltung die Flüssigkeit entweder erhitzt, um den Phasenübergang zu machen oder sie wird gekühlt. Auch wird eine Bewegungsvorrichtung beschreiben, die über einen visuellen Blickkontakt gesteuert wird, wobei dementsprechend über eine Steuereinrichtung Wärme zugeführt wird, um eine Bewegung durchzuführen oder eine Stellung zu halten.

Der Patent Abstracts of Japan Nr. 55 060 707 vom 8. Mai 1980 offenbart eine Bewegungseinrichtung, bei der eine Flüssigkeit erhitzt oder gekühlt wird, um über einen Stab eine grobe Bewegung durchzuführen, beispielsweise um einen Kompressor zu realisieren.

Es ist dementsprechend eine Aufgabe gemäß der vorliegenden Erfindung, die im Stand der Technik vorhandenen Nachteile soweit als möglich zu beseitigen. Ferner ist es eine Aufgabe gemäß der vorliegenden Erfindung, eine neuartige Bewegungsvorrichtung zu schaffen, die weniger anfallig gegenüber den Temperaturschwankungen der Umwelt ist.

Die oben genannte Aufgabe wird mittels einer Mikrobewegungsvorrichtung gemäß dem Patentanspruch 1.

Die mit diesen Bewegungsvorrichtungen zu erzielenden Vorteile beruhen darauf, daß Wärme zur Stabilisierung bzw. zur Bewegung und damit zur Einwirkung auf den Bewegungsabschnitt herangezogen werden kann, um bei einer herkömmlichen Bewegungsvorrichtung, die auf einer hydraulisch-mechanischen Verstelleinrichtung beruht, bei Einstellungsschwankungen mehr Stabilität zu verleihen, bzw. um bei einer Bewegungsvorrichtung mit den Merkmalen des Patentanspruchs 1 überhaupt erst eine Reaktion des Bewegungsabschnittes zu veranlassen, die auf einer dynamischen Regelung beruht, wobei entweder die aktive Kältequelle oder die aktive Wärmequelle auf eine bestimmte Leistung eingestellt wird, und ausgehend von dieser vorgegebenen Leistung wird mit dem jeweils anderen thermischen Beeinflussungsmittel geregelt.

Mit anderen Worten, bei einer herkömmlichen Bewegungsvorrichtung mit einer hydraulisch-mechanischen Verstellungseinrichtung, die aufgrund von Temperaturschwankungen eine ungewollte Verstellung erfährt, soll diese beispielsweise mittels eines Bewegungsoder Temperatursensors erfaßt werden und durch Wärmezufuhr oder -abfuhr ausgeglichen werden. Das heißt, wenn der Bewegungssensor erfaßt, daß sich der Bewegungsabschnitt aus seiner gewünschten Position entfernt, wird die Hydraulikflüssigkeit innerhalb oder außerhalb der hydraulisch-mechanischen Verstelleinrichtung geheizt oder gekühlt, um eine Ausdehnung der Flüssigkeit bzw. des Fluids bzw. deren Kontraktion zu bewirken, so daß die hydraulisch-mechanische Verstelleinrichtung, die den Bewegungsabschnitt vorantreibt bzw. zurückholt, auf den Bewegungsabschnitt durch die sich ausdehnende Hydraulikflüssigkeit einwirkt, so daß dieser seine gewünschte Position einnehmen bzw. aufrechterhalten kann.

Es sollte keine Unstetigkeit in der Ausdehnungscharakteristik des Fluids auftreten, da sprunghafte Änderungen zu unerwünschten sprunghaften Druckänderungen und damit sprunghaften Bewegungen führen. Derartige Unstetigkeiten treten z. B. bei Phasenübergängen auf.

Der erfindungsgemäße Gegenstand weist eine aktive Kältequelle auf, die auf die Fluidmenge der jeweiligen Bewegungsvorrichtung einwirkt, wodurch sich die Fluidmenge zusammenziehen kann, worauf der Bewegungsabschnitt ebenfalls reagiert. Auf diese Weise kann der Bewegungsabschnitt eine Bewegung in die Richtung entgegengesetzt zu der Richtung durchführen, die durch die aktive Wärmequelle veranlaßt werden kann.

Die erfindungsgemäße Bewegungsvorrichtung umfaßt eine Meßeinrichtung über die die Temperatur der Fluidmenge und/oder eine Position bzw. Stellung des Bewegungsabschnitts erfaßbar sind. Ist beispielsweise ein bestimmtes Volumen der Fluidmenge in einem geschlossenen Behälter vorhanden, der über die Wärmequelle und die Kältequelle in seiner Temperatur eingestellt werden kann, so kann über die Zuführung von Wärme bzw. Abführung von Wärme das Gesamtvolumen der Fluidmenge in dem geschlossenen Behälter und in der daran anschließenden Steuerleitung, die über eine Flüssigkeitsanbindung auf den Bewegungsabschnitt einwirkt, dynamisch so eingestellt werden, daß der Bewegungsabschnitt und damit das zu bewegende Objekt eine bestimmte Position einnimmt. Diese Steuerung bzw. Regelung kann über die Temperatur der Fluidmenge erfolgen. Natürlich ist es auch möglich, auch andere Parameter zur Steuerung einzusetzen, beispielsweise eine Position oder Stellung des Bewegungsabschnittes oder des daran befestigten Objektes. Dabei kann je nach Anwendung des Erfindungsgegenstandes auch ein Ereignis als Steuersignal erfaßt werden. Z. B. kann auch eine optische Charakteristik eines Lasers, ein Tunnelstrom zwischen einer zu untersuchenden Probe und einer Elektrode eines Elektronen- oder Rasterelektronenmikroskops, oder dgl. zur Steuerung eingesetzt werden.

Dabei weist die Mikrobewegungsvorrichtung gemäß der Erfindung eine Regelung auf, die die Meßdaten der Meßeinrichtung auswertet, um den Bewegungsabschnitt in eine gewünschte Position zu überführen und/oder in dieser zu halten, bzw. um eine entsprechende Temperatur der Fluidmenge einzustellen oder diese zu halten. Das heißt, wenn die Regelung eine ungewollte Bewegung oder eine ungewollte Temperaturänderung erfaßt, kann geheizt bzw. gekühlt werden, um auf einfache Weise die gewünschte Reaktion der erfindungsgemäßen Bewegungsvorrichtung sicherzustellen.

Die gemäß der Erfindung ausgebildeten Bewegungsabschnitte können beispielsweise mit einem Balg, einer Membran oder einem anderen kontrolliert in wenigstens eine Richtung dehnbaren bzw. erstreckbaren Abschnitt ausgebildet sein, der eine Bewegung aufgrund der Ausdehnung der Fluidmenge aufgrund von Temperaturänderungen der Fluidmenge durchführen kann.

Natürlich kann der gemäß der Erfindung ausgebildete Mikrobewegungsvorrichtung, die im wesentlichen aufgrund einer thermischen Ausdehnung und einer thermisch bedingten negativen Volumensänderung funktioniert, ebenfalls einer Grobvoreinstellungseinrichtung zugeordnet sein. Diese kann auch in der Form einer hydraulisch-mechanischen Verstelleinrichtung oder in einer anderen Form realisiert sein, um zunächst bspw. große Distanzen zu überwinden, um daraufhin mit der im wesentlichen thermisch arbeitenden Bewegungsvorrichtung geringe Entfernungen zu überwinden. Hier kann die thermisch arbeitende Mikrobewegungsvorrichtung ebenfalls dazu herangezogen werden, ungewollte Veränderungen, die über die Grobvereinstellungseinrichtung in das System eingebracht werden, auszugleichen.

Als aktive Wärmequelle wird bevorzugt eine elektrische Heizeinrichtung vorgesehen. Hier ist es möglich, eine sehr fein dosierte Heizleistung zuzuführen. Als aktive Kältequelle wird bevorzugt eine leistungsstärkere Kühlung eingesetzt. Diese leistungsstärkere Kühlung kann beispielsweise in der Form eines Wasseranschlusses vorgesehen sein, über den Kühlwasser zugeführt wird, so daß über das Kühlwasser überschüssige Wärme abgeführt werden kann.

Besonders bevorzugt wird als Kühlquelle eine Peltierkühlung vorgesehen. Peltierkühlungen sind an sich hinlänglich bekannt und müssen deshalb hier nicht eingehend beschrieben werden.

Eine besonders vorteilhafte Ausführungsform ergibt sich durch eines oder mehrere Peltierelemente, mit dem bzw. mit denen eine bestimmte Temperatur eingestellt und über eine entsprechende Steuerung gehalten werden kann, indem die Richtung des durch das Element gehenden elektrischen Stromes umgekehrt wird.

Um mittels einer vergleichsweise geringen Menge an Flüssigkeit größere Ausdehnungen und damit größere Bewegungsspielräume bewerkstelligen zu können, ist es vorteilhaft, wenn die eingesetzte Flüssigkeit, einen hohen Wärmeausdehnungskoeffizienten aufweist. Flüssigkeiten sind hierfür besser als Gase geeignet, da sie zum einen einen ausreichenden Wärmeausdehnungskoeffizienten haben, um nicht zu leicht manipuliert werden zu können, beispielsweise durch geringe Umwelteinflüsse, und zum anderen reicht deren Wärmeausdehnung bei der passenden Auswahl, um ausreichende Bewegungsspielräume zur Verfügung stellen zu können.

Zwar können auch Flüssigkeiten mit hoher Wärmekapazität verwendet werden, um eine gewisse Trägheit gegenüber von Temperatur- bzw. Druckschwankungen zu erzielen, jedoch dürften Flüssigkeiten mit geringer Wärmekapazität zu bevorzugen sein. Dies kann ganz besonders damit begründet werden, daß eine schnelle Reaktion der erfindungsgemäßen Vorrichtung bei einer geringen Wärmekapazität des "Antriebsfluids" besser zu bewerkstelligen ist. Derartige Fluide lassen sich besonders unter den organischen Flüssigkeiten finden. Dagegen sind Flüssigkeiten mit hoher Wärmekapazität, wie etwa Wasser, gegenüber schnellen Temperaturschwankungen quasi unempfindlich.

Es können auch Flüssigkeiten zum Einsatz kommen, die Strahlung absorbieren. Eine schwarze Flüssigkeit kann etwa Licht von einer Laserlichtquelle aufnehmen, um auf diese Weise erwärmt und ausgedehnt zu werden. Auch kann beispielsweise Mikrowellenenergie zur Erwärmung eingesetzt werden.

Voranstehend ist die vorliegende Erfindung in Verbindung mit der Justierung eines Gegenstandes, beispielsweise gegenüber einem anderen Gegenstand erläutert worden. Dabei kann beispielsweise auf dem Bereich der Biotechnologie oder Gentechnologie eine Zelle als der eine Gegenstand in die Nähe eines Mikroskops oder einer Einstechnadel oder dergleichen gehalten werden. Andererseits ist es auch möglich, mittels der vorliegenden Erfindung gezielt bestimmte Kräfte und Drücke zu erzeugen, die zu diversen Zwecken eingesetzt werden können.

Nachfolgend wird die vorliegende Erfindung unter Bezugnahme auf einige bevorzugte Ausführungsformen mit Merkmalen gemäß der Erfindung bzw. gemäß den beiden Gesichtspunkten nach der Erfindung näher beschrieben. Dabei werden weitere Vorteile, Zielsetzungen und Merkmale gemäß der Erfindung offenbart. In den Darstellungen zeigen:
- Fig. 1: eine Prinzipdarstellung einer Ausführungsform mit Merkmalen gemäß der Erfindung;
- Fig. 2: eine Ausführungsform gemäß einem zweiten Aspekt nach der vorliegenden Erfindung in einer Prinzipdarstellung;
- Fig. 3: eine Ausführungsform gemäß dem ersten Aspekt nach der vorliegenden Erfindung mit ausgelagertem Bewegungsabschnitt in einer Prinzipdarstellung; und
- Fig. 4: eine Prinzipdarstellung einer Ausführungsform gemäß dem ersten Aspekt nach der vorliegenden Erfindung mit einer Regelschleife.

In den Figuren sind gleiche oder wenigstens funktionsgleiche Bestandteile mit entsprechenden Bezugszeichen gekennzeichnet (110 entspricht 210 entspricht 310 entspricht 410). Demgemäß ist es nicht erforderlich, identische Abschnitte mehrfach zu beschreiben.

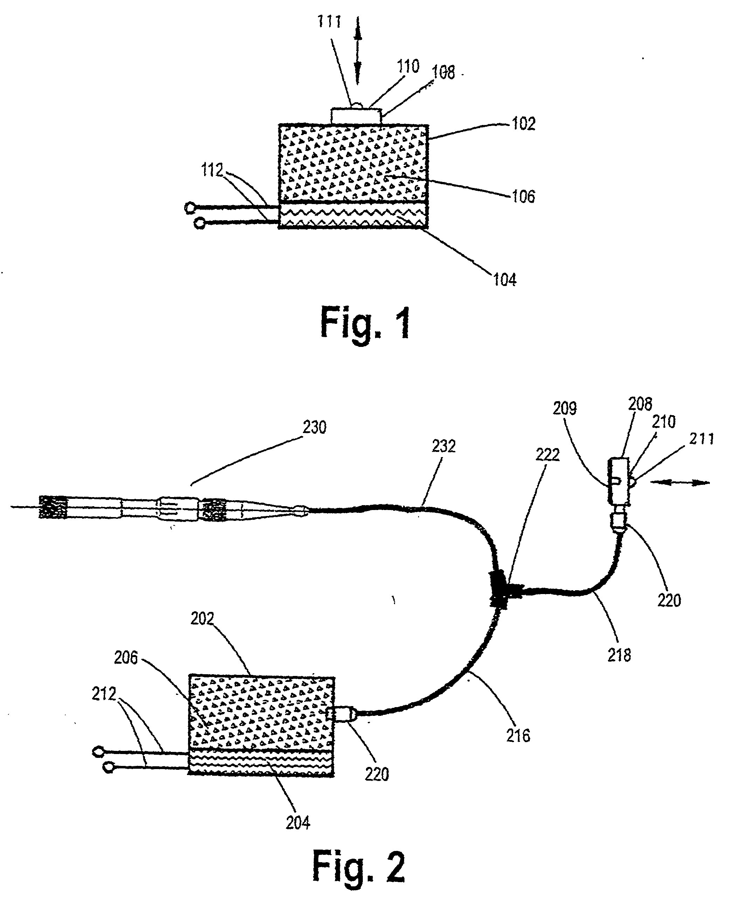

In Fig. 1 ist ein Behälter 102 der ersten Ausführungsform gemäß dem ersten Aspekt nach der vorliegenden Erfindung mit einer Heizeinrichtung 104 versehen. Die Heizeinrichtung 104 ist in diesem Fall eine elektrische Widerstandsheizung, die über Zuleitungen 112 von einem Netzteil mit einer erforderlichen Leistung versorgt werden kann. In dem Behälter 102 ist ein Fluid bzw. eine Flüssigkeit 106. Diese Flüssigkeit 106 kann von der Heizung 104 her erhitzt werden, um zur Ausdehnung gebracht zu werden. Die Volumenvergrößerung bzw. eine Volumenverringerung des Fluids bzw. der Flüssigkeit 106 wird auf einen Bewegungsabschnitt 108, 110, 111 übertragen. Der Bewegungsabschnitt umfaßt einen kontrolliert in eine Richtung vergrößerbaren Bereich, beispielsweise einen Balg, eine Membran oder dergleichen. Im vorliegenden Fall wird durch die Volumenerhöhung bzw. die Volumenverringerung die Membran 110 in Richtung des Doppelpfeils erstreckt bzw. zurückgezogen. Ein Gegenstand, der an der Membran befestigt ist, kann auf diese Weise bewegt werden. An der Membran 110 ist ein Probenhalter 111 angebracht. Ein Topfabschnitt 108 sollte möglichst starr ausgebildet sein, um als Behältnis des "Antriebsfluids" dienen zu können und die Membran 110 zu tragen.

Der Abschnitt 104 enthält außerdem eine Kühlung (nicht dargestellt) und nicht nur eine Heizung, so daß das Flüssigkeitsvolumen 106 in seiner Ausdehnung auf einen konkreten Wert geregelt werden kann, wobei Schwankungen der Umwelttemperatur nur eine geringe Auswirkung haben, so daß eine Stabilisierung möglich ist, das heißt, wenn es erforderlich ist, über längere Zeit einen Gegenstand in einer bestimmten Position sehr genau zu plazieren, ist es möglich, über eine exakte Regelung der Temperatur des Fluids bzw. der Flüssigkeit 106, die Plazierung bzw. Position dieses Gegenstandes exakt aufrechtzuerhalten.

im einfachen Falle könnte als Flüssigkeit Wasser zum Einsatz gelangen. Da in dem Fall der Verwendung eines Kühlelements jedoch eventuell Unstetigkeiten auftreten könnten (Trippelpunkt des Wassers) bzw. Wasser einen Ausdehnungskoeffizienten hat, der noch optimierbar ist, können auch andere Flüssigkeiten eingesetzt werden, beispielsweise Alkohol oder dergleichen, d.h., insbesondere organische Flüssigkeiten.

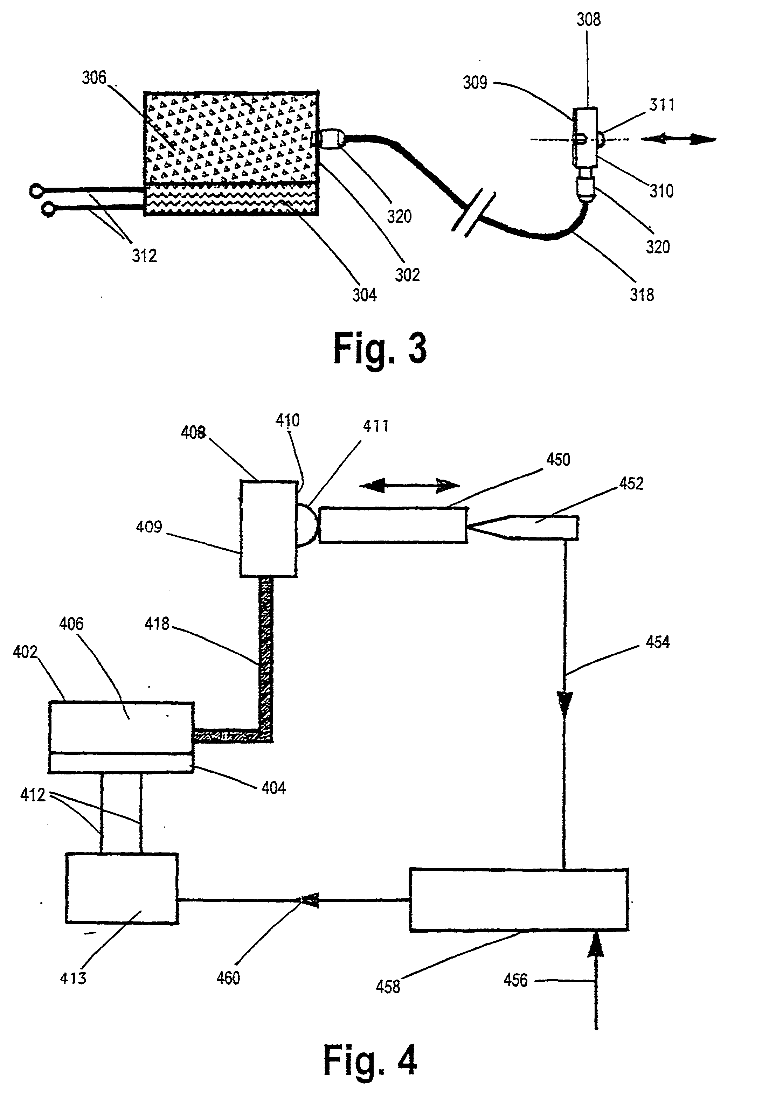

Bei der Erprobung einer Bewegungsvorrichtung, die prinzipiell gemäß Fig. 1 bzw. gemäß den Fig. 3 oder 4 aufgebaut war, ergab es sich, daß bei Verwendung einer Flüssigkeit mit einem sehr ansehnlichen Volumenänderungskoeffizienten bei einem Flüssigkeitsvolumen von ca. 3 cm³ und einer Temperaturänderung von 10°C eine Strecke von ca. 0,5 mm überwunden werden konnte, wenn ein Balg mit einem Durchmesser von 19 mm zum Einsatz gebracht wurde.

Die erforderlichen Temperaturänderungen können beliebig herbeigeführt werden. Es wird jedoch bevorzugt, wenn eine elektrische Heizung zum Einsatz gebracht werden kann.

Gemäß der Erfindung wird eine Kühlung in Verbindung mit einer Heizung verwendet, um entweder die Kühlung oder die Heizung auf eine bestimmte Leistung einzustellen und ausgehend von dieser vorgegebenen Leistung mit dem jeweils anderen thermischen Beeinflussungsmittel eine Regelung bzw. eine Veränderung durchzuführen.

Eine besonders günstige Regelung läßt sich erzielen, wenn die tatsächliche Position der Membran 110 oder des zu justierenden Gegenstandes erfaßt wird und eine Regelung aufgrund einer entsprechenden Meßgröße veranlaßt wird. Auf diese Weise kann z.B. mit einer Soll-Ist-Regelung, etwa einer PI-Regelung, ein Heizstrom und damit eine Heizleistung bzw. eine Kühlleistung geregelt werden. In dem Fall, daß bei dem Soll-Ist-Vergleich eine negative Abweichung erfaßt wird, wird geheizt, und in dem Fall, daß eine positive Abweichung erfaßt wird, wird gekühlt. Auf diese Weise lassen sich Justiergenauigkeiten im Nanometerbereich erzielen und Änderungen der Umgebungstemperatur können anhand des eigentlichen Justierergebnisses, das heißt anhand der Sollposition eines Gegenstandes bzw. der Membran 110 nachgeführt werden. Das heißt, sämtliche Störeinflüsse, wie Änderungen der Umgebungstemperatur, Änderungen des Leistungswertes eines Heizwiderstandes, Änderungen des Leistungswertes einer Peltierkühlung oder dergleichen, fallen nicht ins Gewicht bzw. fallen nur dann ins Gewicht, wenn sie nicht mehr ausgeregelt werden können.

Zudem ist es nicht erforderlich, daß das Fluid bzw. die Flüssigkeit 106 in dem Behälter 102 eine homogene Temperatur aufweist, da eine Stabilisierung dynamisch erzielt wird. Eine Annäherung an eine Sollposition muß nicht linear und vergleichsweise zeitaufwendig, beispielsweise über eine asymptotische Annäherung, erfolgen.

Die vorliegende Erfindung eröffnet neue Einsatzmöglichkeiten, beispielsweise bei Lasern. Bei Lasern könnte über eine Verformung eines als Membran dienenden Spiegels eine Modenabstimmung erfolgen bzw. es könnte aus dem Laserresonator Energie ausgekoppelt werden, um den Laser bzw. dessen Leistung auf gewünschte Werte einzustellen. D.h. es können insbesondere auch die optischen Eigenschaften des Lasers beeinflußt werden. Die ausgekoppelte Laserleistung könnte hier auch als Regelparameter dienen. Entsprechende Einsatzmöglichkeiten gibt es für die vorliegenden Erfindung auf diversen Gebieten, wo durch gezielte Deformation eine Drosselung einer Leistung durchgeführt werden kann, beispielsweise in Mikrowellenanordnungen oder dergleichen. Auch eine Feineinstellung von Mikroventilen läßt sich hier bewerkstelligen.

In Fig. 2 ist eine Ausführungsform dargestellt, wie sie sowohl gemäß dem ersten Gesichtspunkt nach der vorliegenden Erfindung als auch gemäß dem zweiten Gesichtspunkt nach der vorliegenden Erfindung zum Einsatz gelangen kann. Das heißt gemäß dem ersten Gesichtspunkt nach der vorliegenden Erfindung kann ein Flüssigkeitsvolumen 206 in einem Behälter 202 als primäre Bewegungsvorrichtung zum Einsatz gelangen. Dabei kann eine Heizung 204, die auch eine aktive Kühlung umfaßt (nicht dargestellt), das Volumen 206 zur Ausdehnung bringen, während die aktive Kühlung Wärme abführen kann. Über Leitungen 216, 218, die über flüssigkeitsdichte Verbindungen 220, 222 zusammengesetzt sind, kann eine Volumenänderung auf den Bewegungsabschnitt 208 bis 211 übertragen werden.

Über eine Kreuzungsverbindung 222 kann eine herkömmliche hydraulisch-mechanische Verstelleinrichtung 230 über eine Verbindungsleitung 232 ebenfalls an den Bewegungsabschnitt 208 bis 211 angekoppelt sein. Der starre Topf bzw. Behälter 208 weist als Grundfläche einen Bereich 209 auf, um auf einer festen Unterlage oder dgl. aufzuliegen.

Gemäß dem ersten Aspekt kann die hydraulisch-mechanische Verstelleinrichtung 230 eingesetzt werden, um größere Verstelldistanzen zu überwinden, während die Flüssigkeitsmenge 206 im Behälter 202 für kleinere Distanzen zum Einsatz kommt. So kann mittels der Verstelleinrichtung 230 ein Balg bzw. eine Membran 210 erst beispielsweise über einen Bewegungsspielraum von mehreren Millimetern oder gar Zentimetern bewegt werden, während anschließend eine Feinjustierung mittels einer thermischen Veränderung, die an dem Flüssigkeits- bzw. Fluidvolumen 206 verursacht wird, durchgeführt wird. Gemäß dem zweiten Aspekt nach der Erfindung ist es auch möglich, eine Einstellung mittels der Verstelleinrichtung 230 durchzuführen, um anschließend eine Stabilisierung der Position mittels des Flüssigkeitsvolumens 206 innerhalb des Behälters 202 vorzunehmen. Zu diesen Stabilisierungszwecken kann eine Regelschleife gemäß der Ausführungsform nach der Fig. 4 (noch zu beschreiben) zum Einsatz gelangen.

Bei der Ausführungsform gemäß Fig. 3 kommen prinzipiell die gleichen Bestandteile zum Einsatz, wie bei der Ausführungsform gemäß Fig. 1. Der Bewegungsabschnitt 308 bis 311 ist hier lediglich über eine Leitung 318 an das Flüssigkeitsvolumen 306 angekoppelt.

Der Heizungsabschnitt 304 ist hier ebenfalls wiederum mittels einer aktiven Kühlung (nicht dargestellt) aufgewertet, beispielsweise einer Peltierkühlung. Der Abschnitt 304 kann auch insgesamt als Peltierelement ausgebildet sein.

Die Vorrichtung gemäß Fig. 4 umfaßt wiederum einen Bewegungsabschnitt 408 bis 411. Die hintere Fläche 409 des Topfes 408, der als starres Gefäß dient, funktioniert als Standfläche bzw. Abstützfläche, um bei Bewegungen des Balges bzw. der Membran 410 keinerlei Spielräume zuzulassen. Der Bereich 409 hinter der Membran 410 dient zur Fixierung der Membran 410 bzw. des Topfes 408, der zum Aufbau eines gleichmäßigen Drucks, der zu einer gleichmäßigen Verformung der Membran bzw. des Balges 410 führt, eingesetzt wird.

Der Balg bzw. die Membran 410 wirkt auf einen Verschiebetisch 450 ein, auf dem ein zu justierendes Objekt liegen kann. Der Verschiebetisch 450 ist an einen Sensor 452 angesetzt, der über beliebige sensorische Mittel eine Verstellung des Verschiebetisches 450 bzw. eine Positionsänderung des Verschiebetisches 450 erfassen kann. Der Sensor 452 kann ein Berührungssensor, ein optischer Sensor, bzw. ein kapazitiver Sensor sein.

Der Sensor 452 ist über eine Datenleitung 454 mit einer Regelung 458 verbunden, um den vom Sensor 452 gemessenen tatsächlichen Ist-Wert an die Regelung 458 zu übermitteln. Die Regelung 458 erhält über eine Datenleitung 456 einen Soll-Wert, auf den prinzipiell der Verschiebetisch 450 eingestellt werden soll. Gemäß der Differenz zwischen dem Ist-Wert und dem Soll-Wert erzeugt die Regelung ein Steuersignal, das über eine Datenleitung 460 zu einer Stromversorgung 413 für eine Kühlung bzw. Heizung weitergeleitet wird. Entsprechende Stromleitungen 412, die Ströme weiterleiten, die ein Heiz-/Kühl-Aggregat 404 zu den vom Steuersignal veranlaßten Leistungen bewegen, sind ebenfalls vorhanden.

Das vorteilhafterweise als Peltierelement ausgebildete Aggregat 404 heizt bzw. kühlt das Flüssigkeitsvolumen 406 in dem Behälter 402 entsprechend, um über die Leitung 418 und über Volumenänderungen die gewünschten Bewegungen der Membran bzw. des Balges 410 zu bewirken, um den Verschiebetisch 450 in eine bestimmte Position zu bringen bzw. in einer bestimmten Position zu stabilisieren, wobei der Probenhalter 411 als Übertragungsabschnitt dient. Eine Fixierung des Verschiebetisches am Probenhalter 411 kann beliebig erfolgen, falls eine Fixierung überhaupt erwünscht ist.

## Patentansprüche

1. Mikrobewegungsvorrichtung mit einer Menge einer Flüssigkeit (106, 206, 306, 406) in einem Behälter (102, 202, 302, 402) und einem Bewegungsabschnitt (108, 109, 110), der durch eine Einwirkung auf die Flüssigkeitsmenge reagiert, sowie mit einer aktiven Wärmequelle (104, 204, 304, 404), die auf die Flüssigkeitsmenge (106, 206, 306, 406) einwirkt, wodurch diese eine Ausdehnung erfahrt, wobei die thermische Ausdehnung auf den Bewegungsabschnitt übertragbar ist, und mit einer Messeinrichtung zur Messung eines Zustandsparameters der Bewegungsvorrichtung, **dadurch gekennzeichnet, dass**
a) eine aktive Kältequelle (104, 204, 304, 404) vorgesehen ist, die auf die Flüssigkeitsmenge einwirkt, wodurch sich diese zusammenzieht, worauf der Bewegungsabschnitt reagiert, wobei
b) die Messeinrichtung (452) die Temperatur der Flüssigkeitsmenge und/oder eine Position bzw. Stellung des Bewegungsabschnitts (410, 450) erfasst, wobei
c) eine Regelung (452, 458, 411) vorgesehen ist, die die Messdaten der Messeinrichtung (452) auswertet, um den Bewegungsabschnitt in eine gewünschte Position zu überführen bzw. in dieser zu halten bzw. eine entsprechende Temperatur der Flüssigkeitsmenge einzustellen oder diese zu halten, indem die aktive Wärmequelle und die aktive Kältequelle dynamisch geregelt werden, wobei entweder die aktive Kältequelle oder die aktive Wärmequelle auf eine bestimmte Leistung eingestellt wird, und ausgehend von dieser vorgegebenen Leistung mit dem jeweils anderen thermischen Beeinflussungsmittel geregelt wird.

2. Mikrobewegungsvorrichtung nach Anspruch 1, **dadurch gekennzeichnet, daß** der Bewegungsabschnitt einen Balg (110, 210, 310, 410), eine Membran oder dergleichen aufweist, die eine Bewegung aufgrund der Temperaturänderung durchführt.

3. Mikrobewegungsvorrichtung nach einem der Ansprüche 1 oder 2, **dadurch gekennzeichnet, daß** eine Grobverstelleinrichtung, insbesondere eine hydraulisch-mechanische Verstelleinrichtung (230), vorgesehen ist, die zur Reichweitenerstreckung bzw. Betätigungsbeschleunigung einsetzbar ist.

4. Mikrobewegungsvorrichtung nach einem der Ansprüche 1 bis 3, **dadurch gekennzeichnet, daß** die aktive Wärmequelle eine elektrische Widerstandsheizung bzw. ein Peltierelement ist.

5. Mikrobewegungsvorrichtung nach einem der Ansprüche 1 bis 4, **dadurch gekennzeichnet, daß** die aktive Kältequelle ein Peltierelement ist.

6. Mikrobewegungsvorrichtung nach einem der Ansprüche 1 bis 5, **dadurch gekennzeichnet, daß** die Regelung (452, 450, 411) eine Soll-Ist-Regelung, beispielsweise eine PI-Regelung ist.

## Claims

1. A micromovement device with a volume of a liquid (106, 206, 306, 406) in a vessel (102, 202, 302, 402) and a movement part (108, 109, 110), which reacts by an action upon the volume of liquid, and also with an active heat source (104, 204, 304, 404), which acts upon the volume of liquid (106, 206, 306, 406), as a result of which this experiences an expansion, in the course of which the thermal expansion can be transmitted to the movement part, and with a measurement instrument for measuring a status parameter of the movement device,
**characterised in that**
a) an active cold source (104, 204, 304, 404) is provided, which acts on the volume of liquid, as a result of which said volume of liquid contracts, whereupon the movement part reacts, in the course of which
b) the measurement instrument (452) records the temperature of the volume of liquid and/or a position of the movement part (410, 450), in the course of which
c) a closed-loop control unit (452, 458, 411) is provided, which evaluates the measurement data of the measurement device (452) in order to transfer the movement part into a desired position or to keep it in said position or to set an appropriate temperature of the volume of liquid or to maintain said temperature, by the active heat source and the active cold source being dynamically regulated, whereby either the active cold source or the active heat source is set to a determined output, and proceeding from this predetermined output is regulated with the respective other thermal influencing means.

2. A micromovement device according to Claim 1,
**characterised in that** the movement part comprises bellows (110, 210, 310, 410), a membrane or the like, which performs a movement on the basis of the change in temperature.

3. A micromovement device according to one of Claims 1 or 2,
**characterised in that** a coarse adjustment device, in particular a hydraulic-mechanical adjustment device (230), is provided, which can be used for extension of the range or acceleration of the actuation.

4. A micromovement device according to one of Claims 1 to 3,
**characterised in that** the active heat source is an electrical resistance heating or respectively a Peltier element.

5. A micromovement device according to one of Claims 1 to 4,
**characterised in that** the active cold source is a Peltier element.

6. A micromovement device according to one of Claims 1 to 5,
**characterised in that** the control unit (452, 450, 411) is a variance control device, for example a PI controller.

## Revendications

1. Dispositif pour micro-mouvements, comportant une quantité de liquide (106, 206, 306) dans un réservoir (102, 202, 302, 402) ainsi qu'une partie en mouvement (108, 109, 110) qui réagit sous l'effet de la quantité de liquide, ainsi qu'une source de chaleur active (104, 204, 304, 404) qui agit sur la quantité de liquide (106, 206, 306, 406), ce qui fait que celle-ci est soumise à une dilatation, la dilatation thermique pouvant être transmise à la partie en mouvement, un dispositif de mesure pour mesurer un paramètre d'état du dispositif en mouvement, **caractérisé en ce que** :
a) il est prévu une source de froid active (104, 204, 304, 404) qui agit sur la quantité de liquide, ce qui fait que celle-ci se rétracte, ce à quoi réagit la partie en mouvement, par quoi
b) le dispositif de mesure (452) enregistre la température de la quantité de liquide et/ou une position de la partie en mouvement (410, 450),
c) il est prévu une régulation (452, 458, 411) qui exploite les données de mesure du dispositif de mesure (452), afin de transférer la partie en mouvement dans une position voulue ou la maintenir dans celle-ci, ou pour régler à une température correspondante la quantité de liquide ou maintenir celle-ci, la source de chaleur active et la source de froid active étant réglées de manière dynamique, avec soit la source de froid active, soit la source de chaleur active réglée sur une puissance déterminée, et partant de cette puissance donnée, on régule avec l'autre moyen d'influence thermique.

2. Dispositif pour micro-mouvements selon la revendication 1, **caractérisé en ce que** la partie de mouvement comporte un soufflet (110, 210, 310, 410), une membrane ou similaire qui exécute un mouvement basé sur la variation de la température.

3. Dispositif pour micro-mouvements selon l'une des revendications 1 ou 2, **caractérisé en ce qu'**il est prévu un dispositif de réglage grossier, notamment un dispositif de réglage hydromécanique (230), qui peut être utilisé pour étendre la portée ou accélérer l'actionnement.

4. Dispositif pour micro-mouvements selon l'une des revendication 1 à 3, **caractérisé en ce que** la source de chaleur active est un chauffage à résistance électrique ou un élément Peltier.

5. Dispositif pour micro-mouvements selon l'une des revendications 1 à 4, **caractérisé en ce que** la source de froid active est un élément Peltier.

6. Dispositif pour micro-mouvements selon l'une des revendications 1 à 5, **caractérisé en ce que** la régulation (452, 450, 411) est une régulation valeur de consigne-valeur réelle, par exemple une régulation PI.
